# EUROPEAN PATENT APPLICATION

(11) **EP 4 755 981 A1**
(43) Date of publication of application: **10.06.2026**
(21) Application number: 25213434.1
(22) Date of filing: 04.11.2025
(51) Int. Cl.: C09D 11/107, C09D 11/104, C09D 11/40, C09D 11/322, C09D 11/102

(54) **PRETREATMENT LIQUID, INK SET, AND INKJET RECORDING APPARATUS**

(30) Priority: 03.12.2024 JP 2024210493
(71) Applicant: KYOCERA Document Solutions Inc., Osaka-shi, Osaka 540-8585 (JP)
(72) Inventor: TANAKA, Erika, Osaka-shi, Osaka, 540-8585 (JP)
(74) Representative: Viering, Jentschura & Partner mbB Patent- und Rechtsanwälte

(57) **Abstract**

A pretreatment liquid is used for pretreating a medium on which an image is recorded using a water-based ink. The pretreatment liquid contains core-shell particles having a 2-ethylhexyl acrylate as a core and a benzyl methacrylate as a shell, polyester microparticles, a water-soluble organic solvent, and water. A mass ratio of the core-shell particles to the polyester microparticles is 0.3 or more and 3.0 or less.

## Description

### Field

The present disclosure relates to a pretreatment liquid, an ink set, and an inkjet recording apparatus.

### Background

Japanese Patent Application Laid-open No. 2003-313468 and Japanese Patent Application Laid-open No. 2024-062760 each discloses a water-based ink for forming an image on a medium using an inkjet recording apparatus. In such water-based ink, high adhesion to an impermeable medium is essential when forming the image on the impermeable medium with low water permeability. Therefore, a binder is often blended with the water-based ink to improve the adhesion to the impermeable medium. As the binder, polyester is blended with the water-based ink described in Japanese Patent Application Laid-open No. 2003-313468. As the binder, polyurethane microparticles are blended with the water-based ink described in Japanese Patent Application Laid-open No. 2024-062760.

### Summary

In order to achieve the above-mentioned object, a pretreatment liquid according to an embodiment of the present disclosure is used for pretreating a medium on which an image is recorded with a water-based ink. The pretreatment liquid contains core-shell particles including 2-ethylhexyl acrylate as a core and benzyl methacrylate as a shell, polyester microparticles, a water-soluble organic solvent, and water. A mass ratio of the core-shell particles to the polyester microparticles is 0.3 or more and 3.0 or less.

The medium may be an impermeable medium. A polarity component of surface free energy of the impermeable medium may be 20 mJ/m² or less.

An ink set according to an embodiment of the present disclosure includes the pretreatment liquid and the water-based ink. The water-based ink contains a pigment, 3.0 mass% or more and 10 mass% or less of polyurethane microparticles in solid content, and water.

An inkjet recording apparatus according to an embodiment of the present disclosure forms an image on a recording surface of the impermeable medium. The inkjet recording apparatus includes a pretreatment section, a drying section, a recording head, and a control section. The pretreatment section applies the pretreatment liquid to the recording surface. The drying section dries the recording surface. The recording head ejects the water-based ink onto the recording surface. The control section controls execution of a pretreatment step in which the pretreatment section applies the pretreatment liquid to the recording surface, a drying step in which the drying section dries the recording surface after the pretreatment step, and an ejection step in which the recording head ejects the water-based ink onto the recording surface after the drying step.

The inkjet recording apparatus may further include a determination section that determines whether or not the polarity component of the surface free energy of the impermeable medium is 10 mJ/m² or less. In this case, the control section performs the control when the determination section determines that the polarity component of the surface free energy of the impermeable medium is 10 mJ/m² or less.

The inkjet recording apparatus may further include a decision section that decides an amount of the pretreatment liquid to be applied to the recording surface by the pretreatment section based on the surface free energy of the impermeable medium. In this case, the control section applies the amount of the pretreatment liquid decided by the decision section to the recording surface by the pretreatment section.

The inkjet recording apparatus may further include a measuring section that measures the surface free energy of the impermeable medium.

### Brief description of figures

Fig. 1 is a block diagram showing a schematic configuration of an inkjet recording apparatus according to an embodiment of the present disclosure; and
Fig. 2 is a diagram showing an evaluation criteria for line width uniformity.

### Detailed description

In the water-based ink with which polyester is blended described in Japanese Patent Application Laid-open No. 2003-313468, it is difficult to sufficiently obtain an effect of improving adhesion of an image to an impermeable medium. Furthermore, in the water-based ink with which polyurethane microparticles are blended described in Japanese Patent Application Laid-open No. 2024-062760 while it can obtain the effect of improving the adhesion of the image to the impermeable medium, it is difficult to sufficiently obtain an effect of improving the adhesion of the image to the impermeable medium with low polarity, such as a polypropylene film. Furthermore, a water-based ink with which the binder is blended also suffers from a problem of poor wettability on the impermeable medium.

In view of the above circumstances, an object of the present disclosure is to provide a technology capable of forming an image with high adhesion to the impermeable medium using a water-based ink.

Embodiments of the present disclosure will be described.

### [Ink set configuration]

An ink set according to an embodiment of the present disclosure includes a pretreatment liquid and a water-based ink (hereinafter also referred to simply as "ink"). A recording medium targeted for image formation using the ink set according to this embodiment is primarily the impermeable medium having a low-polarity recording surface with low ink permeability and poor ink adhesion. Typically, it is the impermeable medium with a polarity component of surface free energy of 10 mJ/m² or less. Examples of such impermeable medium include a polypropylene film and a polyethylene film. For measuring the surface free energy of the impermeable medium, a commercially available surface free energy measurement apparatus can be used, such as the "handy contact angle meter MSA Flex" manufactured by Sanyo Trading Co., Ltd. Although the following description uses the impermeable medium as the recording medium, the recording medium for forming the image using the ink set according to this embodiment may also be a permeable medium that exhibits the ink permeability.

In the ink set according to this embodiment, the image is formed with the ink on the recording surface of the impermeable medium after applying the pretreatment liquid. Although the pretreatment liquid and the ink configuring the ink set according to this embodiment will be described in detail later, it is configured to form a high-quality image with high adhesion to the recording surface of the impermeable medium.

### [Pretreatment liquid]

### (General configuration)

The pretreatment liquid according to this embodiment contains a binder, polyester microparticles, a water-soluble organic solvent, and water. The pretreatment liquid according to this embodiment can form a pretreatment layer on the impermeable medium by being applied to the recording surface of the impermeable medium and dried.

### (Binder)

In the pretreatment liquid according to this embodiment, the binder is blended to improve the adhesion of the image formed by the ink to the impermeable medium. In the pretreatment liquid according to this embodiment, core-shell particles including 2-ethylhexyl acrylate as a core and benzyl methacrylate as a shell are used as the binder. In the pretreatment liquid according to this embodiment, using 2-ethylhexyl acrylate as the core of the core-shell particles configuring the binder, which has an effect of improving adhesion to a low-polarity surface, improves the adhesion of the image formed by the ink to a low-polarity impermeable medium.

Furthermore, in the pretreatment liquid according to this embodiment, using benzyl methacrylate as the shell of the core-shell particles configuring the binder, which has a high glass transition temperature and high hardness, ejection stability at a recording head can be improved. Therefore, the pretreatment liquid according to this embodiment can be accurately applied to a position where the image is formed on the recording surface of the impermeable medium by ejection from the recording head. Consequently, the pretreatment liquid according to this embodiment can improve drying properties of a printed material while suppressing an amount used.

In this way, the pretreatment liquid according to this embodiment provides the high adhesion to the low-polarity impermeable medium in the image formed by the ink, while ensuring the ejection stability, by giving the core and shell of the core-shell particles configuring the binder mutually different functions. This effect of the pretreatment liquid according to this embodiment is obtained more effectively in combination with the ink of the ink set according to this embodiment. However, the effect of the pretreatment liquid according to this embodiment can be effectively obtained not only when combined with the ink set according to this embodiment but also when combined with a water-based ink different from the ink of the ink set according to this embodiment.

In the pretreatment liquid according to this embodiment, a mass ratio of the binder to the polyester microparticles is 3.0 or less to sufficiently obtain the effect of the binder. Furthermore, in the pretreatment liquid according to this embodiment, it is preferred that a content of the binder is 4.0 mass% or more in solid content to sufficiently obtain the effect of the binder. Also, in the pretreatment liquid according to this embodiment, it is preferred that the content of the binder is 25 mass% or less in solid content to avoid an ejection failure due to increased viscosity accompanying drying.

### (Polyester microparticles)

The polyester microparticles are blended with the pretreatment liquid according to this embodiment to improve the surface free energy of the pretreatment layer formed by coating and drying on the impermeable medium. In this embodiment, polyester microparticles refer to polyester microparticles having a size of 10 nm or more and 300 nm or less. This improves ink wettability on a surface of the pretreatment layer formed on the impermeable medium by the pretreatment liquid according to this embodiment, thereby preventing ink repellency. Consequently, using the pretreatment liquid according to this embodiment enables formation of the high-quality image on the recording surface of the impermeable medium. Furthermore, the improved ink wettability enables the formation of the image without gaps using a smaller ink volume, thereby reducing ink consumption.

In the pretreatment liquid according to this embodiment, to sufficiently obtain an effect of the polyester microparticles described above, the mass ratio of the binder to the polyester microparticles is 3.0 or less. Furthermore, in the pretreatment liquid according to this embodiment, it is preferred that a content of the polyester microparticles is 5 mass% or more in solid content to sufficiently obtain the effect of the polyester microparticles described above. Also, in the pretreatment liquid according to this embodiment, it is preferred that the content of the polyester microparticle is 25 mass% or less in solid content to avoid the ejection failure due to increased viscosity accompanying drying.

### (Water-soluble organic solvent)

The water-soluble organic solvent to be blended with the pretreatment liquid according to this embodiment is not particularly limited as long as it is compatible with other components. In the pretreatment liquid according to this embodiment, drying properties of the pretreatment liquid can be adjusted by the water-soluble organic solvent. Examples of the water-soluble organic solvents usable in the pretreatment liquid according to this embodiment include methanol, ethanol, 1-propanol, 2-propanol, propylene glycol, acetone, tetrahydrofuran, and acetonitrile.

In the pretreatment liquid according to this embodiment, it is preferred that a content of the water-soluble organic solvent is 10 mass% or more and 40 mass% or less, more preferably 20 mass% or more and 30 mass% or less.

### (Water)

In the pretreatment liquid according to this embodiment, water such as ion-exchanged water, purified water, or distilled water can be used. In the pretreatment liquid according to this embodiment, from the perspective of drying properties and ejection reliability, it is preferred that a water content is 40 mass% or more and 80 mass% or less.

### (Other components)

Components other than those described above may be blended with the pretreatment liquid according to this embodiment, as necessary. For example, a surfactant may be blended with the pretreatment liquid according to this embodiment. In the pretreatment liquid according to this embodiment, the surfactant can improve compatibility and dispersion stability of the respective components. Furthermore, in the pretreatment liquid according to this embodiment, the surfactant can improve the wettability on the recording medium. A nonionic surfactant is preferable as the surfactant to be blended with the pretreatment liquid according to this embodiment.

In addition to the surfactant, various additives such as a solubility stabilizer, an anti-drying agent, an antioxidant, a viscosity modifier, a pH adjuster, and an antifungal agent may be blended with the pretreatment liquid according to this embodiment.

### [Water-based ink]

### (General configuration)

The water-based ink according to this embodiment contains the pigment, the binder, and water. The ink according to this embodiment can form an image on the recording surface of the impermeable medium by being ejected from the recording head of the inkjet recording apparatus onto the recording surface of the impermeable medium and then dried.

### (Pigment)

The ink according to this embodiment contains the pigment as a coloring agent from the perspective of improving color-mixing resistance and water resistance in the image formed on the impermeable medium. The pigment may be either an inorganic pigment or an organic pigment. Additionally, as the pigment, an extender pigment may be used in combination therewith, as necessary.

Specific examples of the inorganic pigment usable in the ink according to this embodiment include carbon black and a metal oxide. Carbon black is particularly preferable for black ink. Examples of the carbon black include furnace black, thermal lamp black, acetylene black, and channel black.

Specific examples of the organic pigment usable in the ink according to this embodiment include an azo pigment, a diazo pigment, a phthalocyanine pigment, a quinacridone pigment, an isoindolinone pigment, a dioxazine pigment, a perylene pigment, a perinone pigment, a thioindigo pigment, an anthraquinone pigment, and a quinophthalone pigment.

In the ink according to this embodiment, a hue is not particularly limited, and any chromatic pigment such as yellow, magenta, cyan, blue, red, orange, or green can be used. Preferred specific examples of the chromatic pigment include C.I. Pigment Yellow, C.I. Pigment Red, C.I. Pigment Orange, C.I. Pigment Violet, C.I. Pigment Blue, and C.I. Pigment Green. The ink according to this embodiment may use one or two or more types selected from these chromatic pigments as the pigment.

### (Binder)

In the ink according to this embodiment, the binder is blended to improve the adhesion of the image to the impermeable medium. In the ink according to this embodiment, polyurethane microparticles, which are fine particles formed from polyurethane, are used as the binder. In this embodiment, the polyurethane microparticles refer to polyurethane particles having a particle size of 10 nm or more and 300 nm or less. By blending the binder, the ink according to this embodiment achieves the effect of improving the adhesion of the image to the impermeable medium.

In the ink according to this embodiment, to sufficiently obtain the effect of the polyurethane microparticles, it is preferred that a content of the polyurethane microparticles is 3.0 mass% or more in solid content. Furthermore, in the ink according to this embodiment, to ensure high ejection stability, it is preferred that the content of the polyurethane microparticles is 10 mass% or less in solid content.

### (Water)

In the ink according to this embodiment, water such as ion-exchanged water, purified water, or distilled water can be used. In the ink according to this embodiment, from the perspective of the drying properties and the ejection reliability, it is preferred that the water content is 40 mass% or more and 80 mass% or less.

### (Other components)

Components other than those described above may be blended with the ink according to this embodiment, as necessary. For example, in the ink according to this embodiment, a pigment dispersion resin that improves dispersibility of the pigment in the solvent may be used. The pigment dispersion resin forms pigment dispersion together with the pigment by adsorbing onto a pigment surface within a pigment dispersion liquid. Examples of the pigment dispersion resin include a copolymer of at least one monomer selected from (meth)acrylic acid alkyl ester, styrene, and vinyl naphthalene, and at least one monomer selected from (meth)acrylic acid and maleic acid.

As the pigment dispersion resin, resin having a repeating unit derived from (meth)acrylic acid ((meth)acrylic acid unit), a repeating unit derived from (meth)acrylic acid alkyl ester ((meth)acrylic acid alkyl ester unit), and a styrene unit is preferred. In this case, a percentage of the (meth)acrylic acid unit among all repeating units in the pigment dispersion resin is preferably 4.5 mass% or more and 8.0 mass% or less. A percentage of the (meth)acrylic acid alkyl ester unit among all repeating units in the pigment dispersion resin is preferably 35 mass% or more and 70 mass% or less. A percentage of the styrene unit among all repeating units in the pigment dispersion resin is preferably 27.0 mass % or more and 60.0 mass % or less. As the pigment dispersion resin, resin having the repeating unit derived from methacrylic acid, the repeating unit derived from methyl methacrylate, the repeating unit derived from butyl acrylate, and the styrene unit is more preferred.

In the ink according to this embodiment, a content of the pigment dispersion resin is preferably 0.5 mass% or more and 8.0 mass% or less, and more preferably 1.5 mass% or more and 4.0 mass% or less. In the ink according to this embodiment, setting the content of the pigment dispersion resin to 0.5 mass% or more allows more effective suppression of pigment agglomeration. In the ink according to this embodiment, setting the content of the pigment dispersion resin to 8.0 mass% or less suppresses an occurrence of the ejection failure.

In the pigment dispersion, in which the pigment dispersion liquid configured of the pigment and the pigment dispersion resin prior to being prepared as the ink, it is preferred to use water as a dispersion medium. The pigment dispersion liquid preferably further contains a low molecular weight surfactant to improve the dispersibility of the pigment dispersion. A d50 of the pigment dispersion configured of the pigment and the pigment dispersion resin is preferably 50 nm or more and 200 nm or less, and more preferably 70 nm or more and 130 nm or less. The d50 of the pigment dispersion can be measured, for example, using a dynamic light scattering particle size distribution analyzer (e.g., "Zetasizer Nano Zs" manufactured by Malvern Panalytical Ltd.) with a sample solution prepared by diluting the pigment dispersion liquid 300-fold with deionized water. In the pigment dispersion liquid, the pigment content is preferably 5.0 mass% or more and 25.0 mass% or less, and more preferably 10.0 mass% or more and 20.0 mass% or less. In the pigment dispersion liquid, the content of the pigment dispersion resin is preferably 2.0 mass% or more and 10.0 mass% or less, and more preferably 4.0 mass% or more and 8.0 mass% or less. In the pigment dispersion liquid, a content of the low molecular weight surfactant is preferably 0.1 mass% or more and 2.0 mass% or less, and more preferably 0.3 mass% or more and 1.0 mass% or less.

Furthermore, the water-soluble organic solvent may also be blended with the ink according to this embodiment. Examples of the water-soluble organic solvents usable in the ink according to this embodiment include propylene glycol monomethyl ether, propylene glycol monopropyl ether, dipropylene glycol monomethyl ether, dipropylene glycol monopropyl ether, triethylene glycol monobutyl ether, 1,2-propanediol,3-methyl-1,3-butanediol, 1,2-pentanediol, 2-methyl-1,3-propanediol, 1,3-propanediol, dipropylene glycol, 1,5-pentanediol, and 3-methyl-1,5-pentanediol.

Furthermore, a surfactant in addition to the low molecular weight surfactant blend with the pigment dispersion liquid may be blended with the ink according to this embodiment. As the surfactant blended with the ink according to this embodiment is preferably a silicone-based surfactant. The silicone-based surfactant is a surfactant having a siloxane bond within its molecule. In the ink according to this embodiment, blending the silicone-based surfactant improves wet spreadability on a surface of the pretreatment layer formed on the impermeable medium by the pretreatment liquid. A commercially available silicone-based surfactant includes, for example, Silface (registered trademark) SAG002 and Silface SAG503a, manufactured by Nisshin Chemical Industry Co.**,** Ltd.

Furthermore, in addition to the pigment dispersion resin and the water-soluble organic solvent, various additives such as the surfactant, the solubility stabilizer, the antioxidant, the viscosity modifier, the pH adjuster, and a neutralizer may be blended with the ink according to this embodiment.

### [Inkjet recording apparatus]

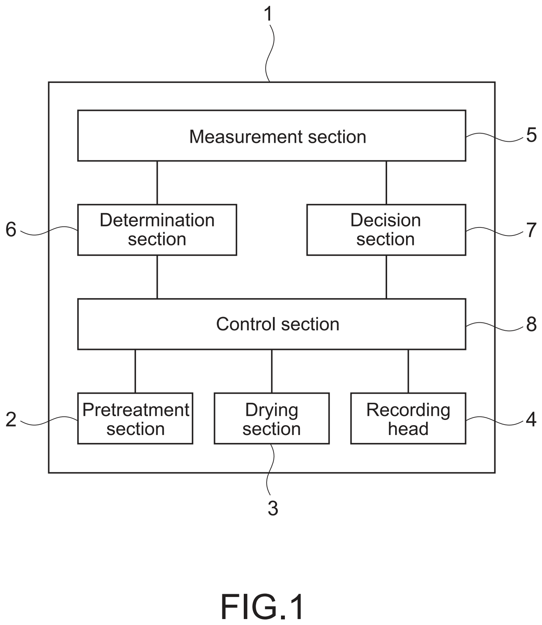

An inkjet recording apparatus 1 according to this embodiment is configured to form the image on the impermeable medium using the ink set according to this embodiment. Fig. 1 is a block diagram showing a general configuration of the inkjet recording apparatus 1. The inkjet recording apparatus 1 includes a pretreatment section 2, a drying section 3, a recording head 4, a measurement section 5, a determination section 6, a decision section 7, and a control section 8.

The pretreatment section 2 performs a pretreatment step of applying the pretreatment liquid to the recording surface of the impermeable medium. The pretreatment section 2 may, for example, have a recording head different from the recording head 4 and be configured to eject the pretreatment liquid at a position where the image is formed on the recording surface of the impermeable medium by the recording head. The recording head that ejects the pretreatment liquid is preferably a line head. Note that the pretreatment section 2 may not have a configuration that uses the recording head, but may, for example, have a configuration that applies the pretreatment liquid to an entire area of the recording surface of the impermeable medium using a roller.

The drying section 3 performs a drying step to dry the recording surface of the impermeable medium onto which the pretreatment liquid has been applied by the pretreatment section 2. Through the drying step, the pretreatment liquid applied to the recording surface of the impermeable medium dries to form the pretreatment layer. The drying section 3 may, for example, be configured with a heater that dries the recording surface of the impermeable medium by heating.

The recording head 4 forms the image by ejecting ink at the position where the image is to be formed on the recording surface of the impermeable medium. The recording head 4 is preferably the line head.

The measurement section 5 measures the surface free energy of the impermeable medium on which the image is formed. Any known measurement methods may be used for measuring the surface free energy in the measurement section 5.

The determination section 6 uses the surface free energy of the impermeable medium measured by the measurement section 5 to determine whether or not the polarity component of the surface free energy of the impermeable medium on which the image is formed is 20 mJ/m² or less.

The decision section 7 decides an amount of the pretreatment liquid to be applied by the pretreatment section 2 to the recording surface of the impermeable medium on which the image is formed, using the surface free energy of the permeable medium measured by the measurement section 5.

The control section 8 controls the pretreatment step, the drying step, and an ejection step to be performed in this order when the polarity component of the surface free energy of the impermeable medium on which the image is formed is determined by the determination section 6 to be 20 mJ/m² or less. Furthermore, the control section 8 controls an applied amount of the pretreatment liquid by the pretreatment section 2 onto the impermeable medium on which the image is formed so that the applied amount is decided by the decision section 7.

It should be noted that the inkjet recording apparatus 1 is not limited to the above configuration and may be modified, as necessary. For example, the inkjet recording apparatus 1 may not include the measuring section 5. In this case, the inkjet recording apparatus 1 may be configured such that, for example, the determining section 6 and/or the decision section 7 can obtain the surface free energy of the impermeable medium via a user input. Furthermore, the inkjet recording apparatus 1 may not include at least one of the determining section 6 and the decision section 7. In this case, the inkjet recording apparatus 1 may be configured, for example, to obtain, via the user input, information such as whether or not the impermeable medium requires a pretreatment by applying the pretreatment liquid, or information about the applied amount of the pretreatment liquid by the pretreatment section 2 to the impermeable medium.

### [Examples and Comparative Examples]

Examples and Comparative Examples of the present disclosure include preparation of the pretreatment liquid and the ink, and evaluation of the ink set. Note that the following Examples merely illustrate examples of the present disclosure, and the present disclosure is not limited to the configurations of the following Examples.

### (Preparation of pretreatment liquid)

The binder for the pretreatment liquid was prepared as a dispersoid in an aqueous emulsion by mixing 2-ethylhexyl acrylate as the core and benzyl methacrylate as the shell in a 7:3 ratio and undergoing emulsion polymerization. For the pretreatment liquid, Elitel ka-5034 (manufactured by Unitika Ltd., solid content 30 mass%) containing the polyester microparticles was used as the dispersoid.

Pretreatment liquids p1 to p7 were prepared such that contents of core-shell particles (in solid content), the polyester microparticles (in solid content), propylene glycol, and deionized water were as shown in Table 1. Table 1 also shows a mass ratio of the core-shell particles to the polyester microparticles in the pretreatment liquids p1 to p7.

**[Table 1]**

| | | Pretreatment liquid | | | | | | |
|---|---|---|---|---|---|---|---|---|
| | | p1 | p2 | p3 | p4 | p5 | p6 | p7 |
| Component (mass%) | Core-shell particles | 4.6 | 10.0 | 15.0 | 16.7 | - | 3.3 | 20.0 |
| | Polyester microparticles | 15.4 | 10.0 | 5.0 | 3.3 | 20.0 | 16.7 | - |
| | Propylene glycol | 20.0 | 20.0 | 20.0 | 20.0 | 20.0 | 20.0 | 20.0 |
| | Ion-exchanged water | 60.0 | 60.0 | 60.0 | 60.0 | 60.0 | 60.0 | 60.0 |
| Mass ratio of core-shell particles to polyester microparticles | | 0.3 | 1.0 | 3.0 | 5.0 | 0.0 | 0.2 | - |

The pretreatment liquids p1 to p3 have the configuration of the pretreatment liquid according to the above embodiment. The pretreatment liquid p4 differs from the pretreatment liquid according to the above embodiment in that the mass ratio of the core-shell particles to the polyester microparticles is greater than 3.0. The pretreatment liquid p5 differs from the pretreatment liquid according to the above embodiment in that it does not contain the core-shell particles. The pretreatment liquid p6 differs from the pretreatment liquid according to the above embodiment in that it does not contain the polyester microparticles. The pretreatment liquid p7 differs from the pretreatment liquid according to the above embodiment in that the mass ratio of the core-shell particles to the polyester microparticles is less than 0.3.

### (Ink preparation)

First, the pigment dispersion, in which the pigment was dispersed in water, was prepared. The pigment dispersion was prepared by wet dispersing the pigment, the pigment dispersion resin, and water using a media-type wet disperser. For the wet dispersion using the media-type wet disperser, media such as small-particle-size beads (e.g., beads with a d50 of 0.5 mm or more and 1.0 mm or less) can be used. A material of the beads is not particularly limited, but hard materials (e.g., glass and zirconia) are preferred.

In each of the pigment dispersion, a cyan pigment was used as the pigment, styrene-acrylic resin was used as the pigment dispersion resin, and deionized water was used as the water. Furthermore, in each of the pigment dispersion, a content of the pigment was 3.0 mass%, a content of the pigment dispersion was 1.5 mass%, and the remainder was water.

Next, contents of the pigment dispersion (in solid content), the polyurethane microparticles (in solid content), triethylene glycol monobutyl ether, 1,2-propanediol, Silface SAG 503A, and ion-exchanged water set as shown in Table 2 to prepare inks q1 and q2. In each ink, Superflex 870 (manufactured by Daiichi Kogyo Seiyaku co., Ltd., 25 wt% in solid content) containing the polyurethane microparticles as the dispersoid was used.

**[Table 2]**

| | Ink | |
|---|---|---|
| | q1 | q2 |
| Pigment dispersion | 3.0 | 3.0 |
| Polyurethane microparticles | 5.0 | - |
| Triethylene glycol monobutyl ether | 10.0 | 10.0 |
| 1,2- propanediol | 20.0 | 20.0 |
| Silface SAG503A | 0.3 | 0.3 |
| Ion-exchanged water | 61.7 | 66.7 |

The ink q1 has the configuration of the ink according to the above embodiment. The ink q2 differs from the ink according to the above embodiment in that it does not contain the polyurethane microparticles.

### (Evaluation of ink set)

The adhesion and line width uniformity of the image were evaluated for the ink sets including a combination of the pretreatment liquids p1 to p7 and the inks q1 and q2.

### Method of evaluating adhesion of image

For evaluating the adhesion of the image, a solid image was formed by first applying the pretreatment liquid to the impermeable medium and then ejecting the ink. The impermeable medium used was corona-treated polyethylene terephthalate (PET) film (manufactured by Futamura Chemical Co., Ltd., polarity component of surface free energy: 16.6 mJ/m²) and corona-treated biaxially oriented polypropylene (OPP) film (manufactured by Futamura Chemical Co., Ltd., polarity component of surface free energy: 0.5 mJ/m²). A tape (Nichiban Co., Ltd., Cello Tape (registered trademark), 18 mm width, CT-18S) was applied to the solid image formed on the impermeable medium. After peeling off the tape, a surface condition of the solid image was observed, and a percentage of an area of the image peeled off to an entire area where tape was applied on the solid image was measured. A measurement value obtained was used as an evaluation value for the adhesion of the image. Each evaluation value of the adhesion of the image was evaluated using the following criteria A to C. The solid image with the evaluation A is passed, while the solid image with the evaluation B or C is failed.
A: 0%
B: less than 50%
C: 50% or more

### Method of evaluating line width uniformity

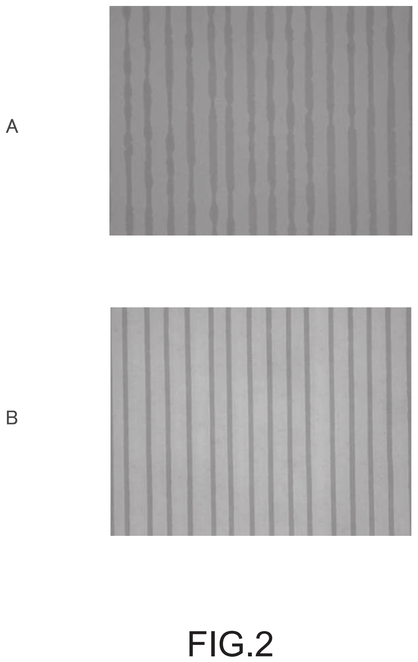

Each ink set was loaded into a single-pass printing evaluation apparatus equipped with an inkjet head ("KJ4B-HD06MHGS-STDV", piezoelectric type, manufactured by Kyocera Corporation). A feeder of the impermeable medium was preheated to 40°C. At an applied voltage of the recording head of 21V, a drive frequency of 20kHz, a droplet amount of an ejected liquid of 3pl, a temperature of the recording head of 32°C, a resolution of 600dpi, flushing counts before the ejection of 1000, and a feed speed of the impermeable medium of 30 m/min, a pattern image of stripes arranged in 1-dot lines, as shown in Figs. 2(A) and (B), was formed. After holding the impermeable medium on which the pattern image formed in a 80°C hot air dryer for 120 seconds, the line width uniformity of the 1-dot lines configuring the pattern image formed on the impermeable medium was visually evaluated. For example, the pattern image shown in Fig. 2(A) exhibits non-uniform line widths, while the pattern image shown in Fig. 2(B) exhibits uniform line widths. In the pattern image shown in Fig. 2(A), the ink wettability on the impermeable medium is insufficient. This is considered to be because multiple adjacent ink droplets on the impermeable medium to be attracted and coalesce, and the size of the ink droplets forming 1-dot becomes non-uniform. As a result, the line width became non-uniform. Each ink was evaluated using the following criteria A and B. The pattern image with the evaluation A is passed, while the pattern image with the evaluation B is failed.
A: line width is uniform.
B: line width is non-uniform.

### (Examples 1 to 3)

In Examples 1 to 3, each ink set was configured using a combination of the pretreatment liquid and the ink shown in Table 3. Each ink set in Examples 1 to 3 has the configuration of the ink set according to the above embodiment. Table 3 shows evaluation results for Examples 1 to 3 regarding the adhesion to the corona-treated PET film, the adhesion to the corona-treated OPP film, and the line width uniformity. As shown in Table 3, in Examples 1 to 3, all passed for the adhesion to the corona-treated pet film, the adhesion to the corona-treated OPP film, and the line width uniformity.

**[Table 3]**

| | | Example | | |
|---|---|---|---|---|
| | | 1 | 2 | 3 |
| Ink set | Pretreatment liquid | p1 | p2 | p3 |
| | Ink | q1 | q1 | q1 |
| Evaluation result | Adhesion (PET) | A | A | A |
| | Adhesion (OPP) | A | A | A |
| | Line width uniformity | A | A | A |

### (Comparative Examples 1 to 6)

In Comparative Examples 1 to 6, each ink set was configured using a combination of the pretreatment liquid and the ink shown in Table 4. The ink set in Comparative Example 1 differs from the ink set according to the above embodiment in that it uses the pretreatment liquid p4 where the mass ratio of the core-shell particles to polyester microparticles is greater than 3.0. The ink set in Comparative Example 2 differs from the ink set according to the above embodiment in that it uses the pretreatment liquid p5 which does not contain the core-shell particles. The ink set in Comparative Example 3 differs from the ink set according to the above embodiment in that it uses the pretreatment liquid p6 where the mass ratio of the core-shell particles to the polyester microparticles is less than 0.3. The ink set in Comparative Example 4 differs from the ink set according to the above embodiment in that it uses the ink q2 which does not contain the polyurethane microparticles. The ink set in Comparative Example 5 differs from the ink set according to the above embodiment in that it uses the pretreatment liquid p7 which does not contain the polyester microparticles. The ink set in Comparative Example 6 differs from the ink set according to the above embodiment in that it does not use the pretreatment liquid.

Furthermore, Table 4 shows evaluation results for Comparative Examples 1 to 6 regarding the adhesion to the corona-treated PET film, the adhesion to the corona-treated OPP film, and the line width uniformity. The ink sets in Comparative Examples 1 and 5 failed in the line width uniformity. This is considered to be because, in Comparative Examples 1 and 5 where the pretreatment liquid does not contain the polyester microparticles or the mass ratio of the polyester microparticles to the core-shell particles in the pretreatment liquid is low, the effect of the polyester microparticles to improve the ink wettability is insufficient. The ink sets in Comparative Examples 2 and 3 failed in the adhesion to the corona-treated OPP film. This is considered to be because, in Comparative Examples 2 and 3 where the pretreatment liquid does not contain the core-shell particles or the mass ratio of the core-shell particles to the polyester microparticles in the pretreatment liquid is low, the effect of the core-shell particles to improve the adhesion of the image is insufficient. The ink set in Comparative Example 4 failed in the adhesion on both the corona-treated PET film and the corona-treated OPP film. This is considered to be because, in Comparative Example 4 where the ink does not contain the polyurethane microparticles, pigment adhesion to the pretreatment layer is not achieved. The ink set in Comparative Example 6 failed both in the adhesion to the corona-treated PET film and the corona-treated OPP film and the line width uniformity. This is considered to be because in Comparative Example 6 which does not use the pretreatment liquid, the effect of improving the ink adhesion and the ink wettability.

**[Table 4]**

| | | Comparative Example | | | | | |
|---|---|---|---|---|---|---|---|
| | | 1 | 2 | 3 | 4 | 5 | 6 |
| Ink set | Pretreatment liquid | p4 | p5 | p6 | p2 | p7 | - |
| | Ink | q1 | q1 | q1 | q2 | q1 | q1 |
| Evaluation result | Adhesion (PET) | A | A | A | C | A | B |
| | Adhesion (OPP) | A | C | C | C | A | C |
| | Line width uniformity | B | A | A | A | B | B |

It should be understood by those skilled in the art that various modifications, combinations, subcombinations and alterations may occur depending on design requirements and other factors insofar as they are within the scope of the appended claims or the equivalents thereof.

## Claims

1. A pretreatment liquid for a medium on which an image is recorded with a water-based ink, comprising:
core-shell particles including 2-ethylhexyl acrylate as a core and benzyl methacrylate as a shell, polyester microparticles, a water-soluble organic solvent, and water, wherein a mass ratio of the core-shell particles to the polyester microparticles is 0.3 or more and 3.0 or less.

2. The pretreatment liquid according to claim 1, wherein
the medium is an impermeable medium.

3. The pretreatment liquid according to claim 2, wherein
a polarity component of surface free energy of the impermeable medium is 10 mJ/m² or less.

4. An ink set, comprising:
the pretreatment liquid according to any one of claims 1 to 3; and a water-based ink, wherein
the water-based ink contains a pigment, 3.0 mass% or more and 10 mass% or less of polyurethane microparticles in solid content, and water.

5. An inkjet recording apparatus (1) for forming an image on a recording surface of an impermeable medium, comprising:
a pretreatment section (2) that applies a pretreatment liquid of the ink set according to claim 4 to the recording surface;
a drying section (3) that dries the recording surface;
a recording head (4) that ejects a water-based ink of the ink set according to claim 4 onto the recording surface; and
a control section (8) that controls execution of a pretreatment step in which the pretreatment section (2) applies the pretreatment liquid to the recording surface, a drying step in which the drying section (3) dries the recording surface after the pretreatment step, and an ejection step in which the recording head (4) ejects the water-based ink onto the recording surface after the drying step.

6. The inkjet recording apparatus (1) according to claim 5, further comprising:
a determination section (6) that determines whether or not a polarity component of the surface free energy of the impermeable medium is 10 mJ/m² or less, wherein the control section (8) performs the control when the determination section determines that the polarity component of the surface free energy of the impermeable medium is 20 mJ/m² or less.

7. The inkjet recording apparatus (1) according to claim 5, further comprising:
a decision section (7) that decides an amount of the pretreatment liquid to be applied to the recording surface by the pretreatment section (2) based on the surface free energy of the impermeable medium, wherein
the control section (8) applies the amount of the pretreatment liquid decided by the decision section (7) to the recording surface by the pretreatment section.

8. The inkjet recording apparatus (1) according to claim 6 or 7, further comprising:
a measuring section (5) that measures the surface free energy of the impermeable medium.
